# NEW EUROPEAN PATENT SPECIFICATION

(11) **EP 2 827 018 B2**
(45) Date of publication and mention of the opposition decision: **12.02.2020**
(45) Mention of the grant of the patent: 30.11.2016
(21) Application number: 13425102.4
(22) Date of filing: 17.07.2013
(51) Int. Cl.: F16D 66/02

(54) **Elastic member for a disk brake pad wear detector**
Elastisches Element für einen Verschleißdetektor eines Scheibenbremsenbelags
Élément élastique pour un détecteur d'usure de garniture de frein à disque

(43) Date of publication of application: 21.01.2015
(73) Proprietor: Cable Logic S.r.l., Caselle Torinese (IT)
(72) Inventor: Palmisano, Pietro, 10072 Caselle Torinese (IT); Guariso, Agostino, 10072 Caselle Torinese (IT)
(74) Representative: Di Sciuva, Michele

(56) References cited:
- EP-A1- 2 012 037
- EP-A1- 2 182 236
- EP-A1- 2 182 236
- WO-A1-2013/030711
- WO-A1-2013/030711
- DE-A1- 3 230 266
- DE-U1- 29 603 040
- FR-A1- 2 617 257

## Description

The present invention relates to an elastic member for a disk brake pad wear detector.

Disk brakes are known to be used for braking vehicle, e.g. truck, wheels.

More specifically, a brake disk comprises:
- a disk which rotates integrally with the wheel and comprises a friction surface; and
- a pad which is movable, parallel to the disk axis, to and from the disk to exert braking action by friction on the friction surface of the disk.

More specifically, the pad defines a support for friction material, which is gradually worn down by the friction exerted on the friction surface of the disk.

To prevent the friction material from wearing down to such an extent as to bring the pad directly into contact with, and so damage, the friction surface of the disk, a wear detector is employed to give a timely indication of maximum wear of the friction material and the need to change the pad.

FR2617257 discloses detector comprising an electric conductor embedded in a elastic body from which a stub and a tab project. The stub its pushed into a hole pierced in a support plate of the disk brake pad and the rest of the body and the tab are folded over around one edge of the plate. The tab is engaged in a groove at the end of the stub so as to fix the detector to the plate.

Another such detector is known from Patent Application WO-A-2013/030711 and substantially comprises:
- a sensor housable inside a seat on the pad;
- an electric cable connected mechanically to the sensor and to an electric circuit; and
- an elastic member - hereinafter referred to as a spring - fitted to the sensor and for retaining the sensor inside the seat on the pad.

More specifically, the sensor and the spring are inserted, radially with respect to the disk axis, inside the seat on the pad, and are extracted from the seat to change the worn pad.

The body of the sensor has a wear portion which projects with respect to the pad support, on the friction material side of the pad, but which is initially withdrawn with respect to the friction material.

With use of the disk brake, the friction material on the pad eventually wears down, gets thinner, and so eventually nears the support and the wear portion of the sensor.

Once the friction material 1 is on a level with the wear portion of the sensor, further operation of the brake simultaneously wears down both the friction material on the pad and the wear portion of the sensor.

Further operation of the brake wears down both the wear portion of the sensor and the electric cable portion inside the sensor, thus reducing the cross section, and increasing the electric resistance, of the cable.

This change in the resistance of the electric cable is detected by the electric circuit, which supplies an output signal proportional to the wear on the friction material.

As the thickness of the friction material on the pad decreases further, the cable portion inside the sensor is cut off, the electric circuit is broken, and a signal is generated indicating the pad is worn down completely and needs changing.

In the solution described in WO-A-2013/030711, the spring is in the form of a strip symmetrical with respect to the insertion direction and interrupted at its opposite ends.

More specifically, the spring comprises:
- a U-shaped main body surrounding and contacting the sensor;
- a continuous portion defined by the main body and extending crosswise to the insertion direction; and
- two projections projecting towards the sensor from the main body, converging towards the insertion direction, and defining respective ends of the spring.

More specifically, the main body comprises two projections symmetrical with respect to the insertion direction and extending on opposite sides of the sensor so as to click the sensor inside the seat on the pad.

The projections lock the spring to the sensor to prevent detachment of the sensor and the spring, particularly when extracting the detector from the seat on the pad

The continuous portion and the projections define opposite axial ends of the spring.

In the detector extraction direction, the continuous portion is located upstream from the projections.

As a result, when extracting the detector, the sensor is pushed by the continuous portion of the spring.

A need is felt within the industry to ensure the spring remains firmly attached to the sensor, even after repeated extraction of the detector from the worn pads, and insertion inside the new ones.

It is an object of the present invention to provide an elastic member for a disk brake pad wear detector, designed to meet the above demand in a simple, low-cost manner.

According to the present invention, there is provided an elastic member for a disk brake pad wear detector, as claimed in Claim 1.

A preferred embodiment of the present invention will be described by way of example with reference to the attached drawings, in which:
Figure 1 shows a view in perspective, with parts removed for clarity, of a brake pad wear detector employed on a truck and comprising an elastic member in accordance with the present invention and fitted to a disk brake pad;
Figure 2 shows a much larger-scale front view of the Figure 1 elastic member in an undeformed configuration;
Figure 3 shows a top plan view of the Figure 2 elastic member;
Figure 4 shows an axial section of the Figure 1-3 elastic member as fitted to the brake pad;
Figure 5 shows the Figure 1 and 4 detector;
Figures 6 to 9 show a further embodiment of the Figure 1-5 elastic member, incorporated in respective automotive disk brake pad wear detectors;
Figure 10 shows a particular type of pad that can be fitted with a detector comprising the elastic member according to the present invention;
Figure 11 shows the further embodiment of the elastic member according to the present invention.

Number 1 in the attached drawings indicates a detector for detecting wear of a disk brake pad 3.

More specifically, detector 1 and pad 3 form a kit 2.

More specifically, the disk brake comprises in known manner:
- a disk (not shown) which rotates, integrally with a wheel for braking, about an axis Y; and
- pad 3 which comprises a support 4, and friction material 5 on one side of support 4.

Pad 3 is movable, parallel to the disk axis, to and from the disk to bring friction material 5 into contact with a surface of the disk and exert braking action on the disk and the wheel.

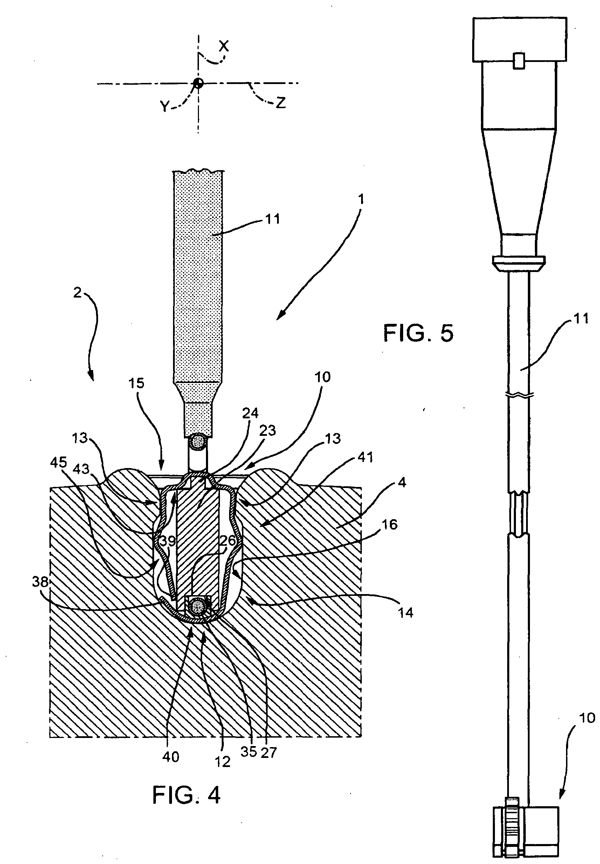

Detector 1 substantially comprises:
- a sensor 10 (Figure 4) comprising a wear member 9 and housed inside a seat 14 in pad 3;
- a cable 11 comprising a portion 12 - in the example shown, an annular portion - housed inside member 9 of sensor 10; and
- an electric circuit (not shown) connectable electrically to cable 11.

Detector 1 also comprises a spring 15, which cooperates with sensor 10 and is designed to click sensor 10 inside seat 14.

More specifically, seat 14 is U-shaped and open radially with respect to the disk axis.

Sensor 10 is inserted, together with spring 15, inside seat 14 along an axis X radial with respect to the disk axis, and is extracted, together with spring 15, along the same X when pad 3 wears out and needs changing.

More specifically, axis X is perpendicular to axis Y and therefore radial with respect to the rotation axis of the disk. Axes X and Y are also perpendicular to an axis Z.

Sensor 10 substantially comprises:
- two plates 20, 21, each lying in a respective plane parallel to axis X and perpendicular to the axis of rotation; and
- member 9 located on the opposite side of plate 21 to plate 20.

Plates 20, 21 are connected to each other by a crosspiece 23 perpendicular to axis X.

On the opposite side to plate 21, plate 20 comprises a groove 25 parallel to axis X.

Crosspiece 23 is connected to a mid-portion of plate 20, whereas plate 21 only extends from one side of crosspiece 23.

Crosspiece 23 comprises two end edges 24, 26 opposite each other along axis X (Figure 4).

Crosspiece 23 extends along axis Y.

Edge 26 is withdrawn with respect to the ends of plates 20, 21, so as to define a groove 27 contiguous with groove 25 (Figure 4).

Crosswise to axis X, member 9 is L-shaped in section, and comprises
- a plate 22 parallel to plates 20, 21 and located on the opposite side of plate 21 to plate 20; and
- a portion 28, which projects towards plate 21 from plate 22, is connected to crosspiece 23, and is located on the opposite side of crosspiece 23 to plate 21.

Sensor 10 also defines:
- a recess 17 open parallel to axes X and Z, and bounded, between plates 21 and 22, by portion 28; and
- two recesses 18 and 19 open parallel to axes X and Z, and located on opposite sides of crosspiece 23.

More specifically, recess 18 is defined between plates 20 and 21, and recess 19 is defined between plate 20 and portion 28.

In the example shown, plates 20, 21 and member 9 are formed in one piece.

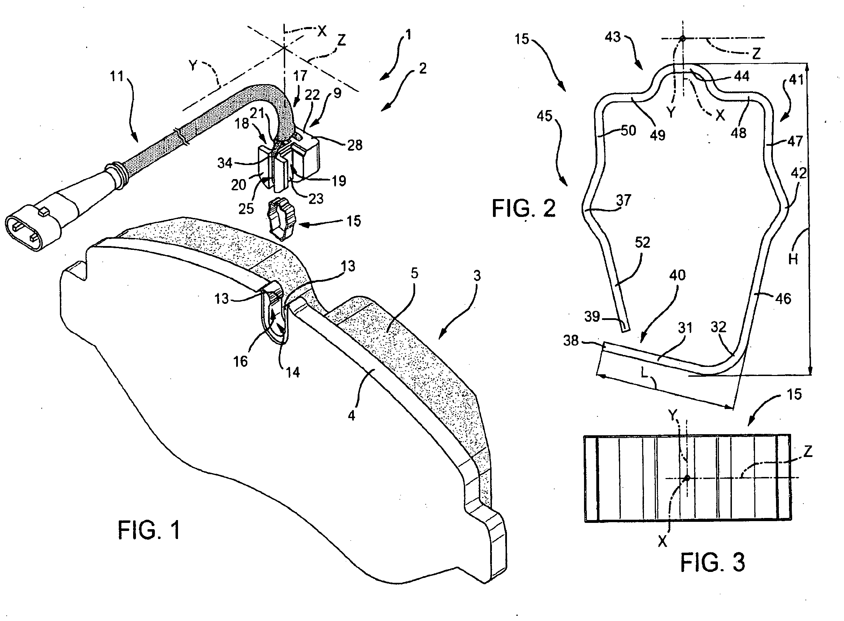

Sensor 10 is housed inside seat 14 so that member 9 projects from support 4, on the friction material 5 side; edge 26 faces a surface 16 of seat 14; and edge 24 faces away from seat 14 (Figures 1 and 4).

Portion 12 of cable 11 comprises two portions 34 spaced apart and housed inside groove 25 and recess 17 respectively; and an end portion 35 interposed between portions 34 and housed inside groove 27.

When connected to sensor 10 inserted inside seat 14, portion 35 of portion 12 is located at the surface 16 end of seat 14 (Figures 1 and 4).

In the example shown, spring 15 is in the form of a bent strip.

In the example shown, spring 15 is made of stainless steel.

More specifically, spring 15 is bent onto sensor 10, and comprises two opposite free ends 38 and 39.

Spring 15 advantageously comprises a single tab 40 defining end 38, cooperating at least indirectly with sensor 10, and bent crosswise to axis X so that spring 15 and sensor 10 remain integral with each other as they are inserted into and extracted from seat 14.

With reference to Figure 2, and working from end 38 to end 39, spring 15 comprises:
- tab 40;
- a lateral portion 41 which is bent with respect to tab 40, on the opposite side to end 39, and has a projection 42 on the opposite side to sensor 10;
- a portion 43 which is opposite tab 40, is bent with respect to portion 41, and has a projection 44 projecting on the opposite side to tab 40; and
- a portion 45 which is bent with respect to portion 43, is opposite portion 41, comprises a projection 37 on the opposite side to sensor 10, and defines end 39 at the end opposite portion 43.

Portions 41 and 45 extend substantially parallel to axis X, and portion 43 extends substantially parallel to axis 2.

More specifically, working from tab 40 to portion 43, portion 41 comprises:
- a segment 46 sloping with respect to and diverging from axis X;
- U-shaped projection 42; and
- a segment 47 parallel to axis X.

Working from segment 47 to portion 45, portion 43 comprises:
- a segment 48 perpendicular to axis X and to the disk axis;
- projection 44; and
- a segment 49 perpendicular to axis X and to the disk axis.

Working from portion 43 to end 39, portion 45 comprises :
- a segment 50 parallel to axis X;
- U-shaped projection 37; and
- a segment 52 sloping towards axis X.

Tab 40 comprises a straight main portion 31 sloping with respect to axis X; and a curved portion 32 interposed between portion 31 and segment 46.

More specifically, working from portion 41 to end 39, tab 40 slopes towards portion 43.

Tab 40 also projects from portion 41 towards sensor 10.

Given the design of tab 40, spring 15 is asymmetrical with respect to axis X.

Tab 40 is of a length L (Figure 2). When spring 15 is undeformed, length L of the tab is preferably over 40% of the height H of spring 15 measured parallel to axis X.

Even more preferably, length L of tab 40 is over 50% of height H when spring 15 is undeformed.

In the example shown, length L ranges between 51% and 55% of height H when spring 15 is undeformed.

When fitted to sensor 10, portions 41 and 45 are located inside recesses 18 and 19 respectively, and end 38 rests against crosspiece 23 (Figure 4).

Portion 43 is positioned astride edge 24 of crosspiece 23, so that projection 44 is engaged by edge 24.

Tab 40 contacts portion 35 of cable 11 and retains it inside groove 27 (Figure 4).

Tab 40 is designed to extend beyond crosspiece 23.

It is important to note that, when spring 15 is fitted to sensor 10, tab 40 is located at the surface 16 end of seat 14, and portion 43 is positioned facing the open end of seat 14.

As shown in Figure 4, surface 16 of seat 14 defines two shoulders 13 for retaining projections 37 and 42 inside seat 14.

As a result, when extracting sensor 10 and spring 15, tab 40 pushes cable 11 and sensor 10 out of seat 14.

In actual use, spring 15 is fitted to sensor 10 by elastically parting tab 40 and portion 45, and then fitting tab 40 so as to cooperate with portion 35 of cable 11 already fitted to sensor 10.

Sensor 10 is then inserted inside seat 14 so that tab 40 is positioned facing the contour of seat 14, and portion 43 of spring 15 is positioned facing the open end of seat 14.

In this condition, projections 37 and 42 engage seat 14 to fix detector 1 to pad 3.

When braking, pad 3 is moved towards the disk to bring friction material 5 into sliding contact with the disk. As a result, friction material 5 gradually wears down towards portion 9 until it is eventually on a level with portion 9 of sensor 10.

From this point on, further operation of the disk brake wears down portion 9 of sensor 10 and eventually part of portion 12 of cable 11.

This produces a reduction in the cross section of cable 11 and a corresponding increase in the electric resistance of cable 11. This change in resistance is detected by the electric circuit, which supplies an output signal proportional to the wear of friction material 5.

Further operation of the disk brake produces additional wear of friction material 5, until portion 12 of cable 11 is eventually cut off, thus breaking the electric circuit and generating a signal indicating pad 3 is worn down completely.

When completely worn down, pad 3 must be changed.

Detector 1 must therefore be removed from seat 14 on the worn pad 3 and inserted inside seat 14 on a new pad 3.

More specifically, sensor 10 is extracted along axis X. As the sensor is extracted, tab 40 presses elastically against portion 35 of cable 11 to prevent spring 15 from detaching from sensor 10.

In the extraction direction along axis X, tab 40 is located upstream from continuous portion 43.

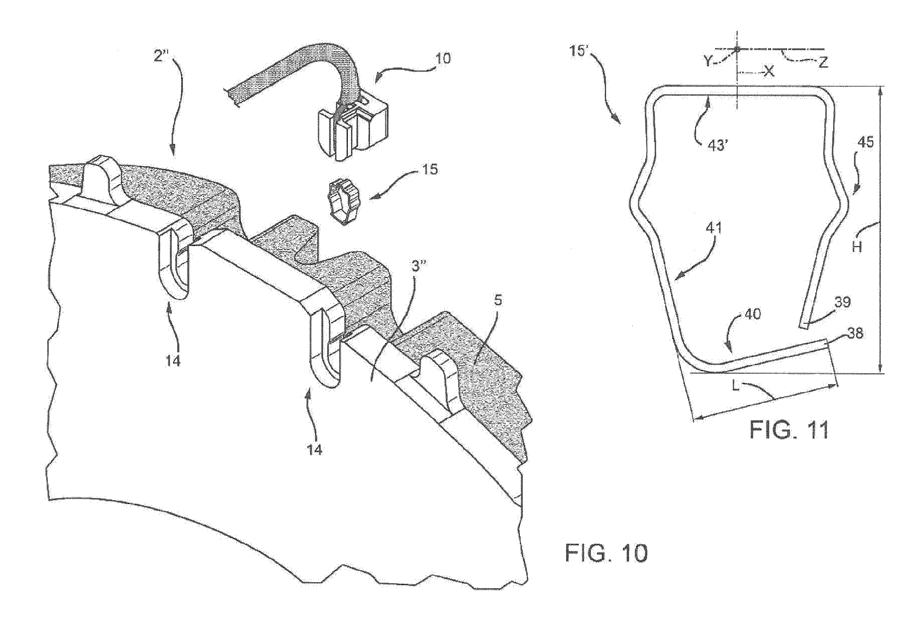

Number 15' in Figure 11 indicates a second embodiment of the spring according to the present invention, and in particular for automotive use.

Spring 15' is similar to spring 15, and will only be described below as regards the differences between the two, and using the same reference numbers, where possible, for any identical or equivalent parts of springs 15, 15'.

In particular, spring 15' differs from spring 15 by comprising a portion 43' completely parallel to axis Z.

Operation of spring 15' is exactly the same as spring 15 and therefore not described in detail.

Number 2" in Figure 10 indicates a kit in accordance with a third embodiment of the present invention.

Kit 2' is similar to kit 2, and will only be described below as regards the differences between the two, and using the same reference numbers, where possible, for any identical or equivalent parts of kits 2, 2".

Kit 2" differs from kit 2 by pad 3" comprising two or more seats 14 spaced apart along axis Z.

Operation of kit 2" is exactly the same as kit 2 and therefore not described in detail.

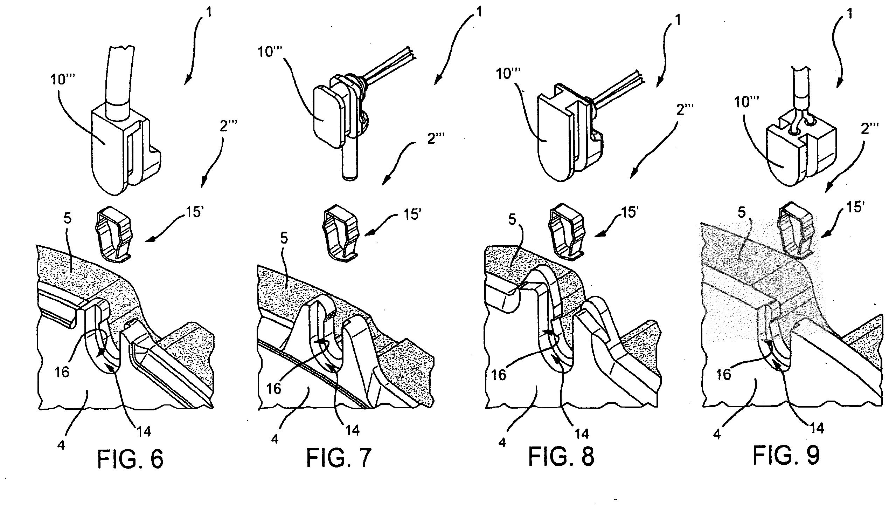

Number 2"' in Figures 6 to 9 indicates a kit in accordance with a fourth embodiment of the present invention.

Kit 2"' is similar to kit 2, and will only be described below as regards the differences between the two, and using the same reference numbers, where possible, for any identical or equivalent parts of kits 2, 2"'.

Kit 2"' differs from kit 2 by pad 3"' being an automotive pad, and by sensor 10"' - not forming part of the present invention - also being a normally automotive type, and comprising spring 15' as opposed to spring 15.

Operation of kit 2"' is exactly the same as kit 2 and therefore not described in detail.

The advantages of spring 15, 15' according to the present invention will be clear from the above description.

In particular, spring 15, 15' has a single tab 40 extending crosswise to axis X and cooperating indirectly with sensor 10.

The Applicant has observed that, with the above design of spring 15, 15', the number of times detector 1 can be removed from seat 14 is three or more times that of the known solution described in the introduction to the present invention, without spring 15, 15' detaching from sensor 10, and/or without spring 15, 15' deforming permanently or breaking, and/or without sensor 10 breaking.

This is partly due to the not inconsiderable length of tab 40 crosswise to axis X, unlike the projections in the known solutions described in the introduction to the present description.

By contacting sensor 10, continuous portion 43, 43" aids in keeping sensor 10 ands spring 15 secured to each other.

Moreover, when extracting detector 1, portions 41 and 45 are automatically compressed towards the axis of seat 14. And the not inconsiderable length of tab 40 crosswise to axis X prevents this deformation of spring 15, 15' from detaching it from sensor 10.

Finally, by contacting portion 35 of cable 11, tab 40 prevents cable 11 from detaching from sensor 10 as sensor 10 is extracted.

Clearly, changes may be made to spring 15, 15' as described herein without, however, departing from the protective scope of the present invention.

## Claims

1. An elastic member (15, 15') for a sensor (10) of a wear detector (1) for detecting wear of a disk brake pad (3); said elastic member (15, 15') being insertable into or extractable from a seat (14) on said pad (3) together with said sensor (10) and along an axis (X) and comprising:
- a continuous portion (43, 43') cooperating with said sensor (10),
- a second tab (45), which extends substantially parallel to axis (X),
- a lateral portion (41), which extends substantially parallel to axis (X),
the elastic member being **characterized by** comprising only one first tab (40), on the opposite side to said continuous portion (43, 43') along axis (X), which defines a first free end (38) of the elastic member (15, 15'), is designed to cooperate at least indirectly with said sensor (10), and is bent crosswise to said axis (X), so as to keep said elastic member (15, 15') and said sensor (10) integral with each other, at least when extracting the sensor (10) along said axis (X);
said second tab (45) defining a second free end (39) opposite said first free end (38), of said elastic member (15, 15');
said first tab (40) having a length (L); and the elastic member having a height (H) measured along said axis (X) and with reference to an undeformed configuration of said elastic member (15, 15'); said length (L) being over 40% of said height (H);
said elastic member (15, 15') being asymmetrical with respect to said axis (X), given the design of said first tab (40).

2. An elastic member as claimed in Claim 1, **characterized in that** said first tab (40) is located upstream from said continuous portion (43, 43') in the extraction direction of said sensor (10) along said axis (X), so as to exert thrust on said sensor (10) as the sensor (10) is extracted.

3. An elastic member as claimed in Claim 1 or 2, **characterized in that** said first tab (40) slopes with respect to said axis (X) when said elastic member (15, 15') is undeformed.

4. An elastic member as claimed in Claim 3, **characterized in that**, in the direction of said first free end (38), said first tab (40) converge towards said continuous portion (43, 43').

5. An elastic member as claimed in any one of the foregoing Claims, **characterized in that** said second tab (45) comprises a projection (37) designed to fit inside said seat (14) on said pad (3) to retain said detector (1) on said pad (3).

6. An elastic member as claimed in any one of the foregoing Claims, **characterized in that** said first tab (40) extends from the side of said sensor (10) to said first free end (38).

7. A detector (1) for detecting wear of a disk brake pad (3), **characterized by** comprising :
- a sensor (10) insertable into or extractable from a seat (14) on said pad (3) along an axis (X), and designed to detect wear of a friction material (5) on said pad (3); and
- an elastic member (15, 15') as claimed in any one of the foregoing Claims and fitted to said sensor (10).

8. A detector as claimed in Claim 7, **characterized by** also comprising an electric cable (11) fixed to said sensor (10); and in that said first tab (40) contacts a portion (35) of said electric cable (11) housed inside said sensor (10).

9. A kit (2, 2", 2"') comprising :
- a detector (1) as claimed in Claim 7 or 8; and
- a brake pad (3, 3") defining a seat (14) for housing said sensor (10) of said detector (1).

## Patentansprüche

1. Elastisches Element (15, 15') für einen Sensor (10) eines Verschleißdetektors (1) zum Detektieren des Verschleißes eines Scheibenbremsbelags (3); wobei das elastische Element (15, 15') zusammen mit dem Sensor (10) und entlang einer Achse (X) in einen Sitz (14) auf dem Belag (3) einsetzbar oder aus diesem herausziehbar ist, und mit:
- einem durchgehenden Abschnitt (43, 43'), der mit dem Sensor (10) kooperiert,
- einem zweiten Streifen (45), welcher sich im Wesentlichen parallel zu der Achse (X) erstreckt,
- einem seitlichen Abschnitt (41), welcher sich im Wesentlichen parallel zur Achse (X) erstreckt,
wobei das elastische Element **gekennzeichnet ist durch** nur einen ersten Streifen (40) auf der entgegengesetzten Seite des durchgehenden Abschnitts (43, 43'), entlang der Achse (X), welcher ein erstes freies Ende (38) des elastisches Elements (15, 15') bildet, der so ausgebildet ist, dass dieser wenigstens indirekt mit dem Sensor (10) kooperiert, und quer zu der Achse (X) gebogen ist, um so das elastische Element (15, 15') und den Sensor (10) als Einheit miteinander zusammenzuhalten, wenigstens dann, wenn der Sensor (10) entlang der Achse (X) herausgezogen wird;
wobei der zweite Streifen (45) ein zweites freies Ende (39) entgegengesetzt zum ersten freien Ende (38) des elastischen Elements (15, 15') bildet;
wobei der erste Streifen (40) eine Länge (L) hat; und das elastische Element eine Höhe (H) hat, gemessen entlang der Achse (X) und in Bezug zu einer unverformten Konfiguration des elastischen Elements (15, 15'); wobei die Länge (L) über 40% der Höhe (H) beträgt;
wobei das elastische Element (15, 15') angesichts des Designs des ersten Streifens (40) asymmetrisch in Bezug zu der Achse (X) ist.

2. Elastisches Element nach Anspruch 1, **dadurch gekennzeichnet, dass** der erste Streifen (40) in der Extraktionsrichtung des Sensors (10) entlang der Achse (X) stromaufwärts von dem durchgehenden Abschnitt (43, 43') angeordnet ist, um so auf den Sensor (10) Druck auszuüben, wenn der Sensor (10) herausgezogen wird.

3. Elastisches Element nach Anspruch 1 oder 2, **dadurch gekennzeichnet, dass** der erste Streifen (40) in Bezug zur Achse (X) geneigt ist, wenn das elastische Element (15, 15') unverformt ist.

4. Elastisches Element nach Anspruch 3, **dadurch gekennzeichnet, dass** der erste Streifen (40) in der Richtung des ersten freien Endes (38) in Richtung des durchgehenden Abschnitts (43, 43') konvergiert.

5. Elastisches Element nach einem der vorhergehenden Ansprüche, **dadurch gekennzeichnet, dass** der zweite Streifen (45) einen Vorsprung (37) umfasst, der so ausgebildet ist, dass dieser in den Sitz (14) des Belags (3) passt, um den Detektor (1) auf dem Belag (3) zurückzuhalten.

6. Elastisches Element nach einem der vorhergehenden Ansprüche, **dadurch gekennzeichnet, dass** sich der erste Streifen (40) von der Seite des Sensors (10) zu dem ersten freien Ende (38) erstreckt.

7. Detektor (1) zum Detektieren eines Verschleißes eines Scheibenbremsbelags (3), **gekennzeichnet durch**:
- einen Sensor (10), der entlang einer Achse (X) in einen Sitz (14) auf dem Belag (3) einführbar oder aus diesem herausziehbar ist und so ausgebildet ist, dass dieser einen Verschleiß eines Reibungsmaterials (5) auf dem Belag (3) detektiert; und
- ein elastisches Element (15, 15') nach einem der vorhergehenden Ansprüche und angepasst an den Sensor (10).

8. Detektor nach Anspruch 7, **gekennzeichnet durch** ein elektrisches Kabel (11), das an dem Sensor (10) befestigt ist; und **dadurch, dass** der erste Streifen (40) einen Bereich (35) des elektrischen Kabels (11) kontaktet, der in dem Sensor (10) aufgenommen ist.

9. Bausatz (2, 2", 2"'), mit:
- einem Detektor (1) nach Anspruch 7 oder 8; und
- einem Bremsbelag (3, 3"), der einen Sitz (14) für eine Aufnahme des Sensors (10) des Detektors (1) bildet.

## Revendications

1. Élément élastique (15, 15') destiné à un capteur (10) d'un détecteur d'usure (1) destiné à détecter l'usure d'une garniture de frein à disque (3), ledit élément élastique (15, 15') pouvant être inséré dans ou extrait d'un siège (14) sur ladite garniture (3) avec ledit capteur (10), et le long d'un axe (X), et qui comprend :
- une partie continue (43, 43') qui coopère avec ledit capteur (10),
- une seconde patte (45), qui s'étend de manière sensiblement parallèle à l'axe (X),
- une partie latérale (41), qui s'étend de manière sensiblement parallèle à l'axe (X),
l'élément élastique étant **caractérisé en ce qu'**il comprend une seule première patte (40), sur le côté opposé à ladite partie continue (43, 43') le long de l'axe (X), qui définit une première extrémité libre (38) de l'élément élastique (15, 15'), et qui est conçue pour coopérer au moins indirectement avec ledit capteur (10), et est courbée de manière transversale par rapport audit axe (X), de façon à maintenir ledit élément élastique (15, 15') et ledit capteur (10) solidaires l'un de l'autre, au moins lors de l'extraction du capteur (10) le long dudit axe (X) ;
ladite seconde patte (45) définissant une seconde extrémité libre (39) opposée à ladite première extrémité libre (38), dudit élément élastique (15, 15') ;
ladite première patte (40) ayant une longueur (L) et l'élément élastique ayant une hauteur (H) mesurée le long dudit axe (X) et en référence à une configuration non déformée dudit élément élastique (15, 15'), ladite longueur (L) étant supérieure à 40% de ladite hauteur (H) ;
ledit élément élastique (15, 15') étant asymétrique par rapport audit axe (X) compte tenu de la conception de ladite première patte (40).

2. Élément élastique selon la revendication 1, **caractérisé en ce que** ladite première patte (40) est située en amont de ladite partie continue (43, 43') dans la direction d'extraction dudit capteur (10) le long dudit axe (X), de façon à exercer une poussée sur ledit capteur (10) lorsque le capteur (10) est extrait.

3. Élément élastique selon la revendication 1 ou 2, **caractérisé en ce que** ladite première patte (40) est inclinée par rapport audit axe (X) lorsque ledit élément élastique (15, 15') n'est pas déformé.

4. Élément élastique selon la revendication 3, **caractérisé en ce que**, dans la direction de ladite première extrémité libre (38), ladite première patte (40) converge vers ladite partie continue (43, 43').

5. Élément élastique selon l'une quelconque des revendications précédentes, **caractérisé en ce que** ladite seconde patte (45) comprend une saillie (37) conçue pour se placer à l'intérieur dudit siège (14) sur ladite garniture (3) afin de retenir ledit détecteur (1) sur ladite garniture (3).

6. Élément élastique selon l'une quelconque des revendications précédentes, **caractérisé en ce que** ladite première patte (40) s'étend entre le côté dudit capteur (10) et ladite première extrémité libre (38).

7. Détecteur (1) destiné à détecter l'usure d'une garniture de frein à disque (3), **caractérisé en ce qu'**il comprend :
- un capteur (10) qui peut être inséré dans ou extrait d'un siège (14) sur ladite garniture (3) le long d'un axe (X), et conçu pour détecter l'usure d'un matériau de frottement (5) sur ladite garniture (3), et
- un élément élastique (15, 15') selon l'une quelconque des revendications précédentes, et placé sur ledit capteur (10).

8. Détecteur selon la revendication 7, **caractérisé en ce qu'**il comprend en outre un câble électrique (11) fixé audit capteur (10), et **en ce que** ladite première patte (40) touche une partie (35) dudit câble électrique (11) contenu dans ledit capteur (10).

9. Kit (2, 2", 2"') qui comprend :
- un détecteur (1) selon la revendication 7 ou 8, et
- une garniture de frein (3, 3") qui définit un siège (14) destiné à contenir ledit capteur (10) dudit détecteur (1).
